# FASCICULE DE BREVET EUROPEEN

(11) **EP 3 724 000 B1**
(45) Date de publication et mention de la délivrance du brevet: **29.03.2023**
(21) Numéro de dépôt: 18833680.4
(22) Date de dépôt: 03.12.2018
(51) Int. Cl.: B60B 33/00, B60B 27/00, B60B 27/06

(54) **ROULETTE POUR MEUBLE**
ROLLE FÜR MÖBELSTÜCK
CASTOR FOR FURNITURE

(30) Priorité: 13.12.2017 FR 1771353
(43) Date de publication de la demande: 21.10.2020
(73) Titulaire: TENTE ROULETTES POLYMERES-BRUANDET, 39700 La Barre (FR)
(72) Inventeur: DAYT, Patrick, 25000 Besancon (FR); HUMBERT, Olivier, 39380 La Loye (FR)
(74) Mandataire: Flavenot, Bernard
(86) Numéro de dépôt international: PCT/FR2018/000262
(87) Numéro de publication internationale: WO 2019/115887

(56) Documents cités:
- WO-A1-2016/198754
- CN-U- 205 416 995
- DE-C1- 19 720 574

## Description

La présente invention concerne les roulettes pour meubles.

Par "meuble" au sens de la présente description, on entend tout corps apte à être déplacé sur un sol, par roulement au moyen d'au moins une roulette, pour quelque raison et en quelque lieu que ce soit, par exemple un lit, une table, une armoire, une valise, etc.

Une telle roulette comporte un carter de roue, au moins une roue, généralement deux roues montées en parallèle sur le carter, et des moyens pour que la roue puisse tourner par rapport au carter dans le but d'assurer le déplacement du meuble, ainsi que généralement, mais non obligatoirement, des moyens pour que le carter puisse pivoter autour d'un axe sensiblement vertical par rapport au meuble pour que la roulette soit apte à prendre toutes directions par rapport à ce meuble.

Or, certains fabricants de roulettes ou de meubles comportant des roulettes souhaitent que les roues de ces roulettes portent, sur leur côté visible, un marquage comme des références ou analogues, plus préférentiellement leur propre marque commerciale, essentiellement dans un but publicitaire et/ou d'information.

Il est bien entendu toujours possible d'apposer un tel marquage sur la face latérale visible d'une roue de roulette. Mais il est entraîné en rotation avec la roue, ce qui le rend pratiquement illisible lorsque le meuble muni de cette roulette est déplacé, et se présente selon toute direction possible par rapport à l'horizontale lorsque le meuble est à l'arrêt et que la roue ne tourne plus, ce qui le rend tout aussi peu facilement préhensible et/ou lisible.

Aussi, a-t-il été réalisé une roulette comme celle qui est décrite dans le WO2016/198754 au nom de la Demanderesse. Cette roulette qui pallie l'inconvénient évoqué ci-dessus, comprend un carter de roue, une percée réalisée dans le carter selon un axe dit "de roulement" et débouchant sur la paroi latérale du carter, au moins une roue, un arbre monté dans la percée et conçu pour avoir une portion en saillie par rapport à la paroi latérale du carter sur laquelle débouche la percée, des moyens pour solidariser fixement l'arbre au carter, des moyens pour monter la roue en rotation sur la portion d'arbre comme un roulement en deux parties, un orifice réalisé dans l'extrémité libre de cette portion d'arbre selon un axe sensiblement parallèle à l'axe de roulement, cet orifice débouchant sur la face d'extrémité de la portion d'arbre, et un bouchon enfiché dans l'orifice.

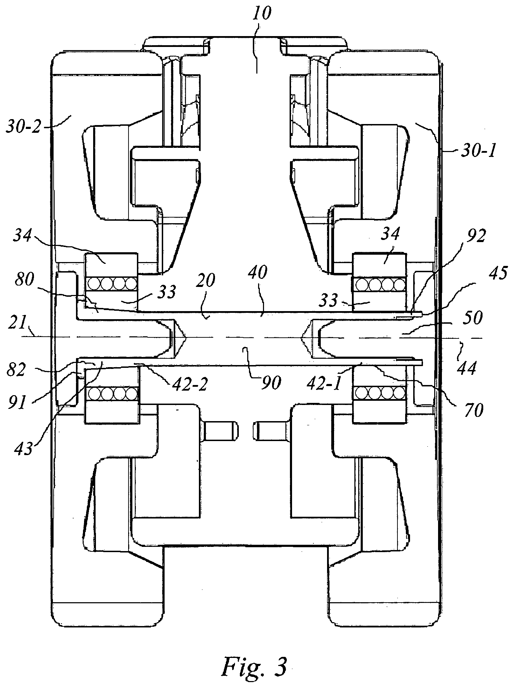

Cependant, une telle roulette peut parfois présenter un inconvénient qui annihile le résultat souhaité, à savoir le fait que, pour différentes raisons, l'arbre et la partie de roulement qui est au contact de l'arbre et du carter, en étant enserrée dans celui-ci et comme illustré sur la figure 3 de ce WO, peuvent relativement vite se libérer du carter, entraînant alors la rotation du bouchon et donc du marquage.

Aussi, la présente invention a-t-elle pour but de limiter encore plus cette possibilité, selon une réalisation très simple et peu onéreuse et surtout plus facile à mettre en oeuvre que celle décrite dans le document antérieur référencé au préambule de la présente description.

Plus précisément, la présente invention a pour objet une roulette pour meuble, comprenant :
- un carter de roue,
- une percée réalisée dans le carter selon un axe « dit de roulement », ladite percée ayant une section transversale de valeur déterminée et débouchant sur la paroi latérale du dit carter, ledit axe de roulement étant sensiblement perpendiculaire à au moins une portion de cette paroi latérale,
- au moins une roue,
- un arbre ayant une section transversale complémentaire de celle de ladite percée, monté au moins par glissement dans ladite percée, ledit arbre étant conçu pour avoir une portion en saillie par rapport à la paroi latérale du dit carter sur laquelle débouche ladite percée,
- des moyens pour solidariser ledit arbre au dit carter,
- des moyens pour monter ladite roue en rotation sur ladite portion d'arbre en saillie, ces moyens étant constitués d'un dispositif à deux éléments reliés entre eux par des moyens de roulement, un premier des deux éléments étant situé au centre du second élément, de moyens pour monter en coopération le premier élément avec ladite portion d'arbre en saillie, et de moyens pour lier le second élément à ladite roue, et
- un bouchon monté en coopération avec l'extrémité libre de la portion d'arbre en saillie,
caractérisée par le fait qu'elle comporte en outre des moyens pour fixer ledit premier élément sur ladite portion de paroi latérale du carter, et par le fait que les moyens pour monter ledit premier élément en coopération avec ladite portion d'arbre en saillie sont constitués par des moyens pour solidariser ce dit premier élément avec ladite portion d'arbre en saillie.

D'autres caractéristiques et avantages de la présente invention apparaîtront au cours de la description suivante donnée en regard des dessins annexés à titre illustratif mais nullement limitatif, dans lesquels :
La figure 1 est une vue schématique de principe illustrant une partie de la structure de la roulette selon l'invention,
La figure 2 est une vue en perspective cavalière d'un mode de réalisation d'un élément essentiel de la roulette selon l'invention, et
La figure 3 représente, vu en coupe transversale, un mode de réalisation industriel de la roulette selon l'invention en accord avec les figures 1 et 2.

Il est tout d'abord précisé que, dans la présente description, si l'adverbe "sensiblement" est associé à un qualificatif d'un moyen donné, ce qualificatif doit être compris au sens strict ou approché.

En référence aux figures annexées, la présente invention concerne une roulette pour meuble.

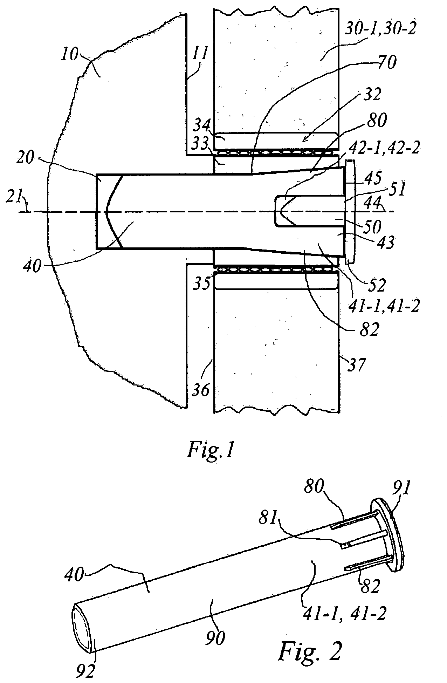

La roulette comprend, notamment en référence aux figures 1 et 3, et en considérant le WO2016/198754 mentionné au préambule comme l'art antérieur le plus proche, un carter de roue 10, une percée 20 réalisée dans le carter selon un axe dit « de roulement » 21, cette percée ayant une section transversale de valeur déterminée et débouchant sur la paroi latérale 11 du carter, l'axe de roulement étant sensiblement perpendiculaire à au moins une portion de cette paroi latérale.

La roulette comprend au moins une roue 30-1, 30-2, et un arbre 40 monté dans la percée 20, cet arbre ayant une section transversale complémentaire de celle de la percée 20 et étant en outre conçu pour avoir au moins une portion 41-1, 41-2 en saillie par rapport à la paroi latérale 11 du carter 10 sur laquelle débouche la percée 20.

Elle comporte aussi des moyens pour solidariser fixement l'arbre 40 au carter 10, et des moyens 32 pour monter la roue 30-1, 30-2 en rotation sur la portion d'arbre en saillie 41-1, 41-2.

Les moyens pour solidariser fixement l'arbre 40 au carter 10 peuvent être constitués de différents moyens. Mais, étant donné sa configuration et celle de la percée 20, ils sont généralement constitués par un enfoncement en force de l'arbre dans la percée, par exemple en ajustant au plus serré leurs sections transversales.

Quant aux moyens 32 pour monter la roue en rotation sur la portion d'arbre en saillie, ils sont constitués d'un dispositif (dit de roulement) à deux éléments 33, 34, reliés entre eux par des moyens de roulement 35 (connus sous le nom de « roulements à billes, aiguilles, ou analogues), un premier 33 des deux éléments étant situé au centre du second élément 34, de moyens pour monter en coopération le premier élément 33 avec la portion d'arbre en saillie 41-1, 41-2, et de moyens pour lier solidairement le second élément 34 à la roue 30-1, 30-2.

La roulette comporte en outre un bouchon 50 monté en coopération avec l'extrémité libre 43 de la portion d'arbre en saillie 41-1, 41-2.

A titre d'exemple de réalisation, pour monter ce bouchon 50 en coopération avec cette extrémité 43, la roulette comporte en outre un orifice 42-1, 42-2 réalisé dans l'extrémité libre 43 de la portion d'arbre en saillie 41-1, 41-2, selon un axe 44 sensiblement parallèle à l'axe de roulement 21 (ou confondu avec cet axe de roulement), cet orifice débouchant sur la face 45 de l'extrémité libre de la portion d'arbre en saillie. Dans ce mode de réalisation préférentiel, le bouchon 50 est enfiché dans cet orifice.

Les moyens pour fixer le premier élément 33 sur le carter 10 sont constitués par des moyens pour fixer ce premier élément 33 directement sur la portion de paroi latérale 11 du carter 10. Ces derniers moyens peuvent être réalisés selon différentes techniques connues en elles-mêmes de l'homme du métier, par exemple par collage, goupillage, sertissage, coincement, etc.

Quant aux moyens pour solidariser ce premier élément 33 du dispositif de roulement avec la portion d'arbre en saillie 41-1, 41-2, selon une caractéristique très avantageuse de l'invention, ils comportent une traversée centrale 70 réalisée au centre du premier élément 33 et ayant une section transversale sensiblement égale, de préférence au moins égale, à la section transversale de la portion d'arbre en saillie, de façon que cette dernière puisse être au moins partiellement enfichée dans cette traversée centrale 70 ; et au moins une nervure 80, 81, 82, ... réalisée en relief sur la surface latérale de la portion d'arbre en saillie 41-1 ; 41-2, de façon que cette nervure constitue un effet de coin entre la portion d'arbre en saillie et la paroi latérale de la traversée centrale 70 lorsque la portion d'arbre en saillie est enfichée, par exemple en force, dans la traversée centrale.

De façon très préférentielle, ces moyens pour fixer le premier élément 33 du dispositif de roulement sur la portion d'arbre en saillie comportent une pluralité de nervures 80, 81, 82, ... réparties de façon sensiblement régulière sur la surface latérale de la portion d'arbre en saillie, figure 2. De façon encore plus préférentielle, pour assurer un bon équilibre de roulement de la roulette, le nombre de nervures 80, 81, 82, ... est un nombre pair, par exemple six.

Selon une autre caractéristique de l'invention, au moins une nervure 80, 81, 82, ..., sinon toutes, présente, selon la direction de l'axe de roulement 21, une hauteur qui varie sur au moins une partie de sa longueur.

La structure de la roulette décrite ci-dessus permet d'atteindre plus sûrement son but tel que défini ci-avant, puisque la portion d'arbre en saillie 41-1, 41-2 présente deux sécurités de blocage en rotation par rapport au carter 10, à savoir : (i) une première sécurité constituée par le fait que l'arbre 40 est solidarisé directement au carter 10 dans la percée 20 et (ii) une seconde sécurité, qui se combine d'ailleurs avec la première (i), constituée par le fait que l'élément de roulement 33 est directement fixé à la fois sur le carter via la paroi latérale 11 et sur la partie d'arbre en saillie 41 via par exemple la pluralité de nervures 80, 81, 82,... qui s'encastrent dans la paroi intérieure de cet élément 33.

A contrario, il faut le noter, la roulette selon le WO référencé ci-dessus, n'avait qu'une seule sécurité relativement difficile à réaliser et relativement peu fiable.

Comme illustré sur la figure 2 qui se déduit très aisément de la figure 1, éventuellement avec l'enseignement du WO référencé ci-avant, l'arbre 40 est formé du corps cylindrique 90 d'un rivet, figure 2.

Ce rivet comporte en outre avantageusement une collerette 91 bordant l'orifice 42-1, 42-2 réalisé dans l'extrémité libre 43 de la portion d'arbre en saillie.

Le rivet permet en outre de réaliser très aisément l'assemblage d'une roulette comme celle qui est illustrée en coupe sur la figure 3, à savoir une roulette comportant très avantageusement deux roues 30-1, 30-2, sur un même arbre 40.

De façon préférentielle, au moins l'un des éléments 33, 34, de préférence le premier élément 33, est constitué d'une bague réalisée en acier et le rivet est réalisé en l'un des deux matériaux suivants : acier et aluminium, de préférence en acier.

L'assemblage de la roulette se fait de façon très simple et peut même être automatisé.

Pour ce faire, les deux roues, chacune avec son dispositif de roulement 32 avec les deux éléments 33, 34, sont positionnées de part et d'autre du carter 10, puis le rivet est introduit dans les traversées centrales 70 des deux éléments 33, 34, l'extrémité 92 du corps cylindrique 90 du rivet qui ne porte pas la collerette 91 étant introduite en premier.

Quand les nervures 80, 81, 82, ... arrivent au niveau de l'élément 33, le rivet est enfoncé en force jusqu'à ce que la collerette bute contre ce premier élément.

Lors de cet enfoncement en force, les nervures s'écrasent en effet de coin entre la portion d'arbre en saillie et la paroi de la percée traversante 70, et se sertissent sur l'élément 33 contre lequel vient ensuite buter la collerette 91 (sur l'élément 33 de la roulette qui se situe sur le côté droit de la figure 3).

Cette structure permet d'utiliser un rivet comme arbre pour assembler, de façon automatique si nécessaire, le carter 10, les roues 30-1, 30-2 et l'arbre 40.

## Revendications

1. Roulette pour meuble comprenant :
• un carter de roue (10),
• une percée (20) réalisée dans le carter selon un axe dit « de roulement » (21), ladite percée ayant une section transversale de valeur déterminée et débouchant sur la paroi latérale (11) du dit carter, ledit axe de roulement étant sensiblement perpendiculaire à au moins une portion de cette paroi latérale (11),
• au moins une roue (30-1, 30-2),
• un arbre (40) ayant une section transversale complémentaire de celle de ladite percée (20), monté au moins par glissement dans ladite percée (20), ledit arbre étant conçu pour avoir une portion (41-1, 41-2) en saillie par rapport à la paroi latérale (11) du dit carter (10) sur laquelle débouche ladite percée (20),
• des moyens pour solidariser ledit arbre au dit carter,
• des moyens (32) pour monter ladite roue (30-1, 30-2) en rotation sur ladite portion d'arbre en saillie (41-1, 41-2), ces moyens étant constitués d'un dispositif à deux éléments (33, 34) reliés entre eux par des moyens de roulement (35), un premier (33) des deux éléments étant situé au centre du second élément (34), de moyens pour monter en coopération le premier élément (33) avec ladite portion d'arbre en saillie (41-1 ; 41-2), et de moyens pour lier le second élément (34) à ladite roue (30-1, 30-2), et
• un bouchon (50) monté en coopération avec l'extrémité libre (43) de la portion d'arbre en saillie (41-1, 41-2),
**caractérisée par le fait qu'**elle comporte en outre des moyens pour fixer ledit premier élément (33) directement sur ladite portion de paroi latérale (11) du carter (10), et **par le fait que** les moyens pour monter ledit premier élément (33) en coopération avec ladite portion d'arbre en saillie (41-1, 41-2) sont constitués par des moyens pour solidariser ce dit premier élément avec ladite portion d'arbre en saillie.

2. Roulette selon la revendication 1, **caractérisée par le fait que** les moyens pour fixer ce dit premier élément (33) sur ladite portion d'arbre en saillie (41-1, 41-2) comportent : une traversée centrale (70) réalisée au centre du dit premier élément (33) d'une section transversale sensiblement égale à la section transversale de ladite portion d'arbre en saillie, cette portion d'arbre étant au moins partiellement enfichée dans ladite traversée centrale (70), et au moins une nervure réalisée en relief sur la surface latérale de ladite portion d'arbre en saillie (41-1, 41-2).

3. Roulette selon la revendication 2, **caractérisée par le fait que** les moyens pour fixer le premier élément (33) sur ladite portion d'arbre en saillie (41-1, 41-2) comportent une pluralité de nervures (80, 81, 82, ...) réparties de façon sensiblement régulière sur la surface latérale de ladite portion d'arbre en saillie.

4. Roulette selon la revendication 3, **caractérisée par le fait que** le nombre de nervures (80, 81, 82, ...) réparties sur la surface latérale de ladite portion d'arbre en saillie est un nombre pair.

5. Roulette selon l'une des revendications 2 à 4, **caractérisée par le fait qu'**au moins une nervure (80, 81, 82, ...) est rectiligne selon la direction de l'axe de roulement (21) et présente une hauteur qui varie sur au moins une partie de sa longueur.

6. Roulette selon l'une des revendications précédentes, **caractérisée par le fait que** ledit arbre (40) est formé du corps cylindrique (90) d'un rivet.

7. Roulette selon la revendication 6, **caractérisée par le fait que** ledit rivet comporte en outre une collerette (91) bordant l'orifice (42-1, 42-2) réalisé dans l'extrémité libre (43) de la portion d'arbre en saillie.

8. Roulette selon l'une des revendications 6 et 7, **caractérisée par le fait qu'**au moins l'un desdits éléments (33, 34) est constitué d'une bague réalisée en acier et que ledit rivet est réalisé en l'un des deux matériaux suivants : acier et aluminium, optionnellement en acier.

## Patentansprüche

1. Rolle für ein Möbel, umfassend:
- einen Radkasten (10),
- eine Durchführung (20), die in dem Kasten entlang einer sogenannten "Rollachse" (21) eingebracht ist, wobei die Durchführung einen Querschnitt mit einem bestimmten Wert besitzt und in die Seitenwand (11) des Kastens mündet, wobei die Rollachse mindestens zu einem Teil dieser Seitenwand (11) im Wesentlichen senkrecht ist,
- mindestens ein Rad (30-1, 30-2),
- eine Welle (40), die einen Querschnitt besitzt, der zu jenem der Durchführung (20) komplementär ist, und die mindestens gleitend in der Durchführung (20) montiert ist, wobei die Welle so beschaffen ist, dass sie einen Abschnitt (41-1, 41-2) aufweist, der von der Seitenwand (11) des Kastens (10), in die die Durchführung (20) mündet, vorsteht,
- Mittel zum Befestigen der Welle an dem Kasten,
- Mittel (32) zum drehbaren Montieren des Rades (30-1, 30-2) an dem vorstehenden Wellenabschnitt (41-1, 41-2), wobei diese Mittel aus einer Vorrichtung mit zwei Elementen (33, 34), die miteinander durch Wälzmittel (35) verbunden sind, wobei eines (33) der beiden Elemente sich im Zentrum des zweiten Elements (34) befindet, aus Mitteln zum zusammenwirkenden Montieren des ersten Elements (33) und des vorstehenden Wellenabschnitts (41-1; 41-2) und aus Mitteln zum Verbinden des zweiten Elements (34) mit dem Rad (30-1, 30-2) gebildet sind, und
- einen Stopfen (50), der zusammenwirkend mit dem freien Ende (43) des vorstehenden Wellenabschnitts (41-1, 41-2) montiert ist,
**dadurch gekennzeichnet, dass** sie ferner Mittel umfasst, um das erste Element (33) direkt an dem Seitenwandabschnitt (11) des Kastens (10) zu befestigen, und dass die Mittel zum zusammenwirkenden Montieren des ersten Elements (33) an dem vorstehenden Wellenabschnitt (41-1, 41-2) durch Mittel zum Befestigen dieses ersten Elements an dem vorstehenden Wellenabschnitt gebildet sind.

2. Rolle nach Anspruch 1, **dadurch gekennzeichnet, dass** die Mittel zum Befestigen dieses ersten Elements (33) an dem vorstehenden Wellenabschnitt (41-1, 41-2) umfassen: eine Mittelstrebe (70), die in der Mitte des ersten Elements (33) mit einem Querschnitt verwirklicht ist, der im Wesentlichen gleich dem Querschnitt des vorstehenden Wellenabschnitts ist, wobei dieser Wellenabschnitt mindestens teilweise in die Mittelstrebe (70) eingesetzt ist, und mindestens eine Rippe, die auf der seitlichen Oberfläche des vorstehenden Wellenabschnitts (41-1, 41-2) erhaben verwirklicht ist, ausgebildet ist.

3. Rolle nach Anspruch 2, **dadurch gekennzeichnet, dass** die Mittel zum Befestigen des ersten Elements (33) an dem vorstehenden Wellenabschnitt (41-1, 41-2) mehrere Rippen (80, 81, 82, ...) aufweisen, die auf der seitlichen Oberfläche des vorstehenden Wellenabschnitts im Wesentlichen gleichmäßig verteilt sind.

4. Rolle nach Anspruch 3, **dadurch gekennzeichnet, dass** die Anzahl der Rippen (80, 81, 82, ...), die auf der seitlichen Oberfläche des vorstehenden Wellenabschnitts verteilt sind, eine gerade Zahl ist.

5. Rolle nach einem der Ansprüche 2 bis 4, **dadurch gekennzeichnet, dass** mindestens eine Rippe, (80, 81, 82, ...) in Richtung der Rollachse (21) geradlinig ist und eine Höhe besitzt, die sich mindestens über einen Teil ihrer Länge variiert.

6. Rolle nach einem der vorhergehenden Ansprüche, **dadurch gekennzeichnet, dass** die Welle (40) aus dem zylindrischen Körper (90) eines Niets geformt ist.

7. Rolle nach Anspruch 6, **dadurch gekennzeichnet, dass** der Niet außerdem einen Flansch (91) aufweist, der eine Öffnung (42-1, 42-2) einfasst, die in dem freien Ende (43) des vorstehenden Wellenabschnitts hergestellt ist.

8. Rolle nach einem der Ansprüche 6 und 7, **dadurch gekennzeichnet, dass** eines der Elemente (33, 34) aus einem Ring gebildet ist, der aus Stahl hergestellt ist, und dass der Niet aus einem der beiden folgenden Materialien hergestellt ist: Stahl und Aluminium, optional aus Stahl.

## Claims

1. A castor for furniture comprising:
• a wheel housing (10),
• a hole (20) made in the housing along an axis known as the "rolling" axis (21), said hole having a cross-section with a determined value and opening out onto the lateral wall (11) of said housing, said rolling axis being substantially perpendicular to at least one portion of this lateral wall (11),
• at least one wheel (30-1, 30-2),
• a shaft (40) with a cross-section that is complementary to that of said hole (20), mounted at least by sliding through said hole (20), said shaft being designed to have a portion (41-1, 41-2) that protrudes out of the lateral wall (11) of said housing (10) onto which said hole (20) opens out,
• means for securing said shaft to said housing,
• means (32) for rotationally mounting said wheel (30-1, 30-2) on said protruding shaft portion (41-1, 41-2), these means being made up of a device with two elements (33, 34) joined to each other by rolling means (35), a first (33) of the two elements being located at the centre of the second element (34), means for mounting the first element (33) to cooperate with said protruding shaft portion (41-1, 41-2), and means for connecting the second element (34) to said wheel (30-1, 30-2), and
• a plug (50) mounted to cooperate with the free end (43) of the protruding shaft portion (41-1, 41-2),
**characterised in that** it further comprises means for fastening said first element (33) directly to said lateral wall portion (11) of the housing (10), and **in that** the means for mounting said first element (33)to cooperate with said protruding shaft portion (41-1, 41-2) are made up of means for securing said first element to said protruding shaft portion.

2. The castor according to claim 1, **characterised in that** the means for fastening said first element (33) to said protruding shaft portion (41-1, 41-2) comprise: a central feedthrough (70) made at the centre of said first element (33) with a cross-section that is substantially equal to the cross-section of said protruding shaft portion, that portion of the shaft being at least partly inserted in the central feedthrough (70), and at least one rib that is raised in relation to the lateral surface of said protruding shaft portion (41-1, 41-2).

3. The castor according to claim 2, **characterised in that** the means for fastening the first element (33) to said protruding shaft portion (41-1, 41-2) comprise a plurality of ribs (80, 81, 82, ...) substantially evenly distributed over the lateral surface of said protruding shaft portion.

4. The castor according to claim 3, **characterised in that** the number of ribs (80, 81, 82 and so on) distributed over the lateral surface of said protruding shaft portion is an even number.

5. The castor according to any of the claims 2 to 4, **characterised in that** at least one rib (80, 81, 82, ...) is straight along the direction of the rolling axis (21) and has a height that varies over at least part of its length.

6. The castor according to any of the foregoing claims, **characterised in that** said shaft (40) is made up of the cylindrical body (90) of a rivet.

7. The castor according to claim 6, **characterised in that** said rivet further comprises a flange (91) on the edge of the opening (42-1, 42-2) made in the free end (43) of the protruding shaft portion.

8. The castor according to any of claims 6 and 7, **characterised in that** at least one of said elements (33, 34) is made up of a ring made of steel and that said rivet is made of one of the two following materials, steel and aluminium, preferably steel.
